# EUROPÄISCHE PATENTANMELDUNG

(11) **EP 0 521 337 A1**
(43) Veröffentlichungstag der Anmeldung: **07.01.1993**
(21) Anmeldenummer: 92110134.1
(22) Anmeldetag: 16.06.1992
(51) Int. Cl.: B29B 7/60, B01F 15/02

(54) **Verfahren zum Mischen und Mischvorrichtung an einem Extruder für Rohstoff und Kleinkomponenten, insbesondere für Farbzusätze**

(30) Priorität: 29.06.1991 DE 4121649
(71) Anmelder: FRIEDRICH THEYSOHN GmbH, D-32547 Bad Oeynhausen (DE)
(72) Erfinder: Hellmann, Bernhard, W-4520 Melle 2 (DE); Krüger, Ernst, Dr., W-4504 Georgsmarienhütte (DE)
(74) Vertreter: Cohausz & Florack Patentanwälte

(57) **Zusammenfassung**

Die Erfindung bezieht sich auf eine an einem Extruder angeordnete Mischvorrichtung für Rohstoff und Kleinkomponenten, insbesondere Farbzusätze. Die Mischvorrichtung besteht aus den Extruder 1 unterfütternden Dosierschnecken 4,6-10 für den Rohstoff und die Kleinkomponenten. Die Austragsmengen der Dosierschnecken 4,6-10 sind im Verhältnis zueinander einstellbar. Die Dosierschnecken 6-10 geben die Kleinkomponenten auf ein dem Extruder 1 zuzuförderndes Förderband 5. Die Mischung erfolgt durch die Förder- und Plastifizierschnecke 2 des Extruders 1.

Für die Zusammenfassung ist Figur 1 bestimmt.

## Beschreibung

Um extrudierte Produkte in einer bestimmten Farbe zu erhalten, gibt es verschiedene Mischmethoden.

Im einfachsten Fall werden Rohstoff in Form von Granulat und Farbkomponenten in einem Mischer gemischt. Da bei diesem Verfahren die Farbkomponenten nur lose an der Oberfläche der Rohstoffpartikel haften, kommt es leicht zu Entmischungen. Bessere Ergebnisse erzielt man zum Beispiel beim Mischen von PVC-Pulver als Rohstoff und Farbpigmenten in einem Heizkühlmischer, bei dem der Rohstoff und die Farbkomponenten bei Temperaturen bis 120^{o}C gemischt und danach abgekühlt werden. Der auf diese Weise erhaltene eingefärbte Rohstoff wird entweder einem Granulierextruder zugeführt, wo das sogenannte eingefärbte Dryblend aufgeschmolzen und anschließend granuliert oder einer Direktextrusion zugeführt wird. Bei der einen Alternativen müssen für das Granulat als Speicher Silobatterien zur Verfügung gestellt werden, während die andere Alternative sehr staubintensiv ist. Anders als Granulat eignet eingefärbtes Pulver sich nicht für eine pneumatische Förderung, weil dabei Entmischungen auftreten können und insbesondere auch eine vollständige Reinigung der Röhre von Farbresten nicht praktikabel ist.

Allen bekannten Methoden ist gemeinsam, daß es in der Praxis nicht möglich ist, für eine bestimmte Menge extrudierten Materials exakt die Menge eingefärbten Rohstoffs zur Verfügung zu stellen, die für die Menge des extrudierten Materials gebraucht wird. In der Praxis wird auf Vorrat gemischt, damit beim Extrudieren genügend Material zur Verfügung steht. Dabei läßt sich nicht vermeiden, daß nicht verwertbare Reste übrig bleiben. Hinzu kommt, daß durch den großen Zeitaufwand zur Herstellung der eingefärbten Kunststoffrohstoffe, zum Beispiel Granulat oder PVC-Dryblend, eine schnelle Reaktion bei Fehlfarben beziehungsweise kurzfristigen Farbänderungen nicht möglich ist.

Der Erfindung liegt die Aufgabe zugrunde, eine Mischvorrichtung an einem Extruder für Rohstoffe und Kleinkomponenten zu schaffen, mit der es möglich ist, ohne großen Aufwand exakt die Menge an mit Kleinkomponenten gemischtem Rohstoff, insbesondere an eingefärbtem Rohstoff, dem Extruder zur Verfügung zu stellen, die dieser für die Herstellung einer bestimmten Menge eines extrudierten Produktes benötigt.

Diese Aufgabe wird mit einer Mischvorrichtung an einem Extruder für Rohstoff und Kleinkomponenten, insbesondere Farbzusätze, gelöst, die aus mehreren den Aufgabestutzen des Extruders fütternden Dosierschnecken für den Rohstoff und die Kleinkomponenten besteht, deren Austragsmengen in einem Verhältnis zueinander einstellbar sind und von denen die Dosierschnecken für die Kleinkomponenten über ein gemeinsames Fördermittel den Aufgabestutzen füttern.

Bei der erfindungsgemäßen Mischvorrichtung erfolgt die Zusammenführung des Rohstoffes und der Kleinkomponenten im unterfütterten Einzugsbereich des Extruders. Wegen des zwischen den Dosierschnecken und dem Aufgabestutzen eingeschalteten gemeinsamen Fördermittels lassen sich beliebig viele Kleinkomponenten in den Aufgabestutzen fördern, ohne daß es Raumprobleme für die Unterbringung der Dosierschnecken gibt. Außerdem erlaubt das bandförmige Fördermittel oder die Rüttelrinne eine unmittelbare Sichtkontrolle der Kleinkomponenten.

Um einerseits die Austragsmenge der Dosierschnecken kontrollieren beziehungsweise steuern zu können, was insbesondere bei den Kleinkomponenten wegen ihres geringen prozentualen Anteils von insgesamt 0,1 bis 5 % der gesamten dem Extruder zugeführten Menge schwierig ist, sind nach einer Ausgestaltung der Erfindung den Dosierschnecken Vorratsbehälter mit Durchsatzmengenmessern unmittelbar vorgeordnet, wobei zumindest die Austragsmengen der Dosierschnecken für die Kleinkomponenten in Abhängigkeit von den Meßwerten der Durchsatzmengenmesser kalibrierbar sind. Dabei basiert die Farbeinstellung auf einer Verhältnisregelung der einzelnen Dosierschnecken, deren Ausstoß pro Umdrehung durch die gravimetrische Durchsatzmengenerfassung kalibriert wird.

Neben dieser Kalibrierung eignet sich für besonders kleine Durchsätze eine Kalibrierung, die auf dem Auszählen der einzelnen Körner des Granulates basiert. Bei dieser Ausgestaltung der Erfindung ist den Dosierschnecken jeweils ein Vorratsbehälter mit Durchsatzmengenmesser unmittelbar vorgeordnet, wobei jeder Dosierschnecke für die Kleinkomponenten eine Granulatzählvorrichtung nachgeordnet ist, die in Abhängigkeit von dem Meßwert des Durchsatzmengenmessers kalibriert wird. Diese Art der Farbeinstellung basiert nicht wie bei der anderen Ausgestaltung auf einer Verhältnisregelung der Drehzahlen der Dosierschnecken, sondern auf einer Verhältnisregelung des Massendurchsatzes der Massenströme der Kleinkomponenten, die auf das Fördermittel gelangen. Wegen der kontinuierlichen Auszählung des Granulates kann bei der Farbeinstellung schnell reagiert werden.

Um bei laufender Produktion die Vorratsbehälter für die Kleinkomponenten fliegend wechseln zu können, sollte zwischen den Vorratsbehältern und den Dosierschnecken jeweils ein Aufgabestutzen angeordnet sein. Da die Aufgabestutzen ein gewisses Speichervolumen haben, können leere Vorratsbehälter gegen volle Vorratsbehälter ohne Unterbrechung der Zugabe der Kleinkomponenten ausgewechselt werden. Die Trennung des Vorratsbehälters läßt sich auch für die gravimetrische Verwiegung nutzen.

Die gewünschte Farbe der Mischung wird aus den zugegebenen Farbkomponenten der einzelnen Vorratsbehälter entwickelt, wobei die Anteile unterschiedlich sein können. Soll beispielsweise eine Mischung mit der Grundfarbe Grün erstellt werden, dann wird von den Kleinkomponenten hauptsächlich Gelb und Blau auf das Förderband gegeben. Durch Zugabe anderer Komponenten kann diese grüne Grundfarbe im Ton variiert werden.

Im folgenden wird die Erfindung anhand einer ein Ausführungsbeispiel darstellenden Zeichnung näher erläutert. Im einzelnen zeigen:

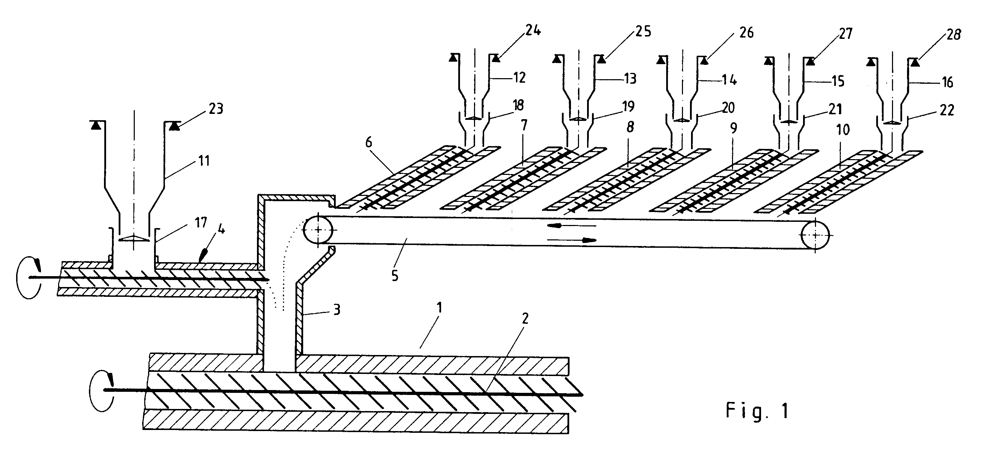

- Figur 1: eine Mischvorrichtung in einem Extruder in schematischer Darstellung und in Seitenansicht,
- Figur 2: einen Teil der Mischvorrichtung gemäß Figur 1, und zwar eine Dosierschnecke für eine Kleinkomponente mit Vorratsbehälter im Vertikalschnitt in einer ersten Ausführung **und**
- Figur 3: einen Teil der Mischvorrichtung gemäß Figur 1, und zwar eine Dosierschnecke für Kleinkomponenten mit einem Vorratsbehälter und einer Granulatzählvorrichtung in einer zweiten Ausführung im Horizontalschnitt.

Ein Extruder 1, von dem in der Zeichnung nur ein Teil dargestellt ist, weist eine Förder- und Plastifizierschnecke 2 auf. Auf dem Extruder 1 ist ein Aufgabestutzen 3 angeordnet, über den Rohstoff und Kleinkomponenten zugeführt werden. Die Zufuhr ist derart gestaltet, daß der Extruder 1 unterfüttert wird. Dies ist wichtig, weil nur dann sämtliches zugeführte Material ohne Nesterbildung abgefördert und auch im Plastifizieraggregat gemischt wird. Der Aufgabestutzen 3 wird mit Rohstoff über eine Dosierschnecke 4 und mit Kleinkomponenten über ein Förderband 5 gefüttert. Anstelle des Förderbandes 5 kann auch eine Rüttelrinne vorgesehen sein. Über dem Förderband 5 sind in Reihe mehrere Dosierschnecken 6-10 für die Kleinkomponenten angeordnet. Die Dosierschnecken 4,6-10 erhalten den Rohstoff beziehungsweise die Kleinkomponenten aus Vorratsbehältern 11-16 über Aufgabestutzen 17-22. Jedem Vorratsbehälter 11-16 ist als Durchsatzmengenmeßvorrichtung eine Waage 23-28 zugeordnet, die an sich bekannt ist.

Im Betrieb werden sämtliche Dosierschnecken 4,6-10, die Komponenten beisteuern sollen, überfüttert, so daß die in den Aufgabestutzen 3 entweder direkt oder über das Förderband 5 abgegebene Menge allein durch die Drehzahl der Dosierschnecken 4,6-10 bestimmt ist. Über die in der Durchsatzmengenmeßvorrichtung 23-28 gemessenen Meßwerte werden die Dosierschnecken 4,6-10 gesteuert. Wegen der geringen Durchsatzmengen der Dosierschnecken 6-10 wird intervallmäßig eine Überprüfung vorgenommen und die Drehzahl entsprechend korrigiert.

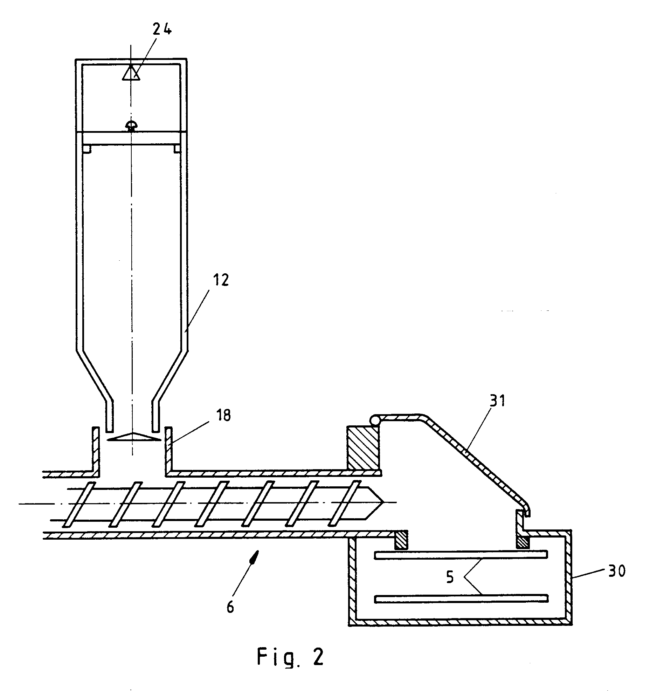

Figur 2 zeigt stellvertretend für sämtliche Dosierschnecken für Kleinkomponenten die Dosierschnecke 6 mit Aufgabestutzen 18, Vorratsbehälter 12 und Durchsatzmengenmeßvorrichtung 24 in Form einer gravimetrischen Verwiegung. Am Ausgang der Dosierschnecke 1 ist das Förderband 5 angeordnet, das in einem Gehäuse 30 untergebracht ist. Das Gehäuse 30 ist oben durch eine durchsichtige Klappe 31 abgedeckt, über die das Förderband 5 einsichtig ist.

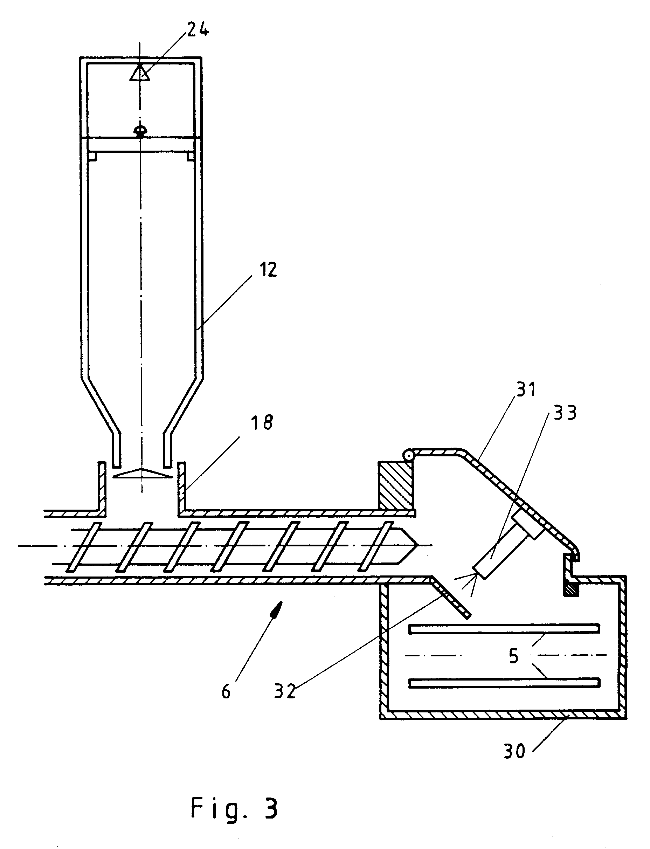

Das Ausführungsbeispiel der Figur 3 unterscheidet sich von dem der Figur 2 lediglich darin, daß am Ende der Dosierschnecke 6 eine Rutschrinne 32 angeordnet ist, über die das Granulat auf das Förderband 5 gelangt. Über der Rutschrinne 32 ist ein Sensor 33 einer Zählvorrichtung angeordnet, mit der die Körner des Granulates gezählt werden, um mit den Meßwerten der gravimetrischen Verwiegung den Durchsatz der Dosierschnecke 6 kalibrieren zu können.

## Patentansprüche

1. Mischvorrichtung an einem Extruder (1) für Rohstoff und Kleinkomponenten, insbesondere Farbzusätze, bestehend aus mehreren, den Aufgabestutzen (3) des Extruders (1) fütternden Dosierschnecken (4,6-10) für den Rohstoff und die Kleinkomponenten, deren Austragsmengen im Verhältnis zueinander einstellbar sind und von denen die Dosierschnecken (6-10) für die Kleinkomponenten über ein gemeinsames Fördermittel (5) den Aufgabestutzen (3) füttern.

2. Mischvorrichtung nach Anspruch 1,
**dadurch gekennzeichnet,** daß den Dosierschnecken (4,6-10) Vorratsbehälter (11-16) mit Durchsatzmengenmessern (23-28) unmittelbar vorgeordnet sind, und daß zumindest die Austragsmengen der Dosierschnecken (6-10) für die Kleinkomponenten in Abhängigkeit von den Meßwerten der Durchsatzmengenmesser (24-28) kalibriert werden.

3. Mischvorrichtung nach Anspruch 1,
**dadurch gekennzeichnet,** daß den Dosierschnecken (4,6-10) jeweils Vorratsbehälter mit Durchsatzmengenmessern (23-28) unmittelbar vorgeordnet sind und daß den Dosierschnecken (6-10) für die Kleinkomponenten Granulatzählvorrichtungen (32,33) nachgeordnet sind, die in Abhängigkeit von den Meßwerten der Durchsatzmengenmesser (24-28) kalibriert werden.
